# EUROPEAN PATENT APPLICATION

(11) **EP 3 597 446 A2**
(43) Date of publication of application: **22.01.2020**
(21) Application number: 18771526.3
(22) Date of filing: 15.05.2018
(51) Int. Cl.: B44D 3/00

(54) **OPTICAL DEVICE FOR PAINTERS**

(30) Priority: 16.03.2017 ES 201730295 U
(71) Applicant: Garcia Amenos, Jafet, 08022 Barcelona (ES)
(72) Inventor: Garcia Amenos, Jafet, 08022 Barcelona (ES)
(74) Representative: Matamoron Hernandez, José Pedro
(86) International application number: PCT/ES2018/070355
(87) International publication number: WO 2018/172592

(57) **Abstract**

The invention relates to an optical device for painters, which can be used to make life drawings, said device being positioned facing the observer, between the scene, image or model to be copied and the working surface. The device comprises a supporting structure (2) including at least two mirrors (3, 4) disposed facing one another, both positioned to form an angle, of approximately 45°, relative to the rear surface of the structure, such that the image, located on the front side of the device (1), received by a first mirror (3) is reflected onto a second mirror (4) and the image reflected in the second mirror is received by the observer located on the rear side of the device (1). One of the mirrors can pivot such as to vary the angle (a) at which it is positioned relative to the rear face (2a) of the structure (2) and, consequently, relative to the first mirror (3), in order to control the orientation of the reflected image received and to adjust same as appropriate. The second mirror (4) can tilt and is secured to the structure (2) by means of a coupling that can move on a shaft (5) solidly connected to a plate (6) against which said mirror (4) is placed, which plate can pivot and be moved manually about the shaft (5) by means of the movement of a spring (7) that can travel along a curved groove (8) provided in the structure (2). The structure takes the form of a case enclosed by walls on each of the sides thereof and equipped with openings (2c, 2b) through which the image to be reproduced is received and reflected. The openings in the case formed by the structure (2) consist of a rectangular opening (2c) provided in the front face (2d) and a circular opening (2b) provided in the rear face (2a) and oriented towards the observer (o).

## Description

### OBJECT OF THE INVENTION

The invention, as shown in the present specifications, refers to an optical device for painters which provides advantages and novelty features to the aimed purpose, which will be described in full detail below.

The object of the present invention is a device whose purpose is serving as a tool for painters or designers in order to copy life models, to which aim it is set up from a box with strategically placed mirrors which, when placed accordingly in front the view, between the scene or image to be copied and the surface to work on, provides an optical effect where both images are overlapped.

### APPLICATIVE FIELD OF THE INVENTION

The applicative field of this invention is within the industrial sector of optical apparatus, devices and appliances, and is more specifically focused on the scope of those to be used as a supporting tool for freehand painting and design works.

### BACKGROUND OF THE INVENTION

In the field of painting and design, many methods and devices are known which help the artist copy or trace models and / or properly display pictures while keeping the appropriate proportions. However, for instance, for tracing pictures, they are usually bulky devices which require power supply and which only enable tracing printed pictures, not living images.

Therefore, as a reference to the current state of the art, it must be stated that, while different devices are known in the market in the scope referred herein, no device exists - at least known by the applicant - having technical and structural features which are the same or similar to those specifically featured by the optical device for painters claimed herein.

### DESCRIPTION OF THE INVENTION

Thus, the optical device for painters proposed by the invention is set up as a novelty within its applicative field, with its characterizing details being duly stated in the appended claims of this specification. More specifically, as set out above, the invention proposes a device in order to help painters or designers at the time of copying life models, and which is essentially configured on the basis of a structure of opposed mirrors, set us so that, when properly set before the observer, at the correct height to be placed between the scene of the picture or the model to be copied and the surface of the paper or canvas on which the picture or model to be copied is to be painted or drawn, it provides the observer with an optical effect, by which both images are overlapped due to binocular disparity. As it is commonly known, binocular disparity, horizontal disparity, retinal disparity or stereopsis (from stereo, meaning solid, and opsis, vision or sight) is the visual perception phenomenon by which, from two slightly different images projected in each eye's retina, the brain is capable of re-composing a tri-dimensional image, which is originated by the different position of both eyes in the head.

Actually, if the observer or the artists watches with one eye only, he/she only sees one of the two images, for instance the image reflected in the mirrors of the scene to be copied, and if he / she watches with the other eye, he / she sees the other image, in this case of the surface on which he / she is working. However, if he / she watches with both eyes due to the clearance between both eyes in the head, an optical effect occurs by which he / she sees both images overlapped, thus allowing him / her to trace the life scene or model which he / she intends to portray, achieving a fast and accurate drawing of it.

Moreover, this overlapping effect provided by the device of the invention, also permits working with the sight - size method which, as it is widely known, is a drawing and painting method for painting an object just at it appears to the artist, on a 1:1 scale, by which the artist first sets a standpoint where the observer and the surface of the drawing seem to have the same size and, using a series of measurement devices, which may include spirit levels, mirrors, plummets, chains and sticks, the artist draws the subject so that, when seen from that standpoint, the drawing and the object have exactly the same size.

To this effect, and in a more specific way, the device of the invention comprises, basically, a supporting structure featuring at least two mirrors set one opposite to the other, both being in a 45° angle, approximately from the back side of the structure, similar to a periscope, namely, in such a way that the image captured by the first mirror, reflection of the scene to be reproduced opposite to the device (on the front side) is reflected in the second mirror, which is opposite to the first mirror, and the image reflected in the second mirror is received by the observer positioned on the opposite side of the device (back side) of the invention.

Preferably, one of the mirrors is secured to the structure by means of a mobile union, which swings in order to slightly vary the angle between both mirror, that is to say, in order to vary its position from the structure and, consequently, the parallelism from the other mirror, in order to position the reflection of the image it gets, and to adjust it in order to fit, with the aforementioned overlapping effect, on the working surface. Such possibility of movement by the swinging mirror in the preferred embodiment is manual, and therefore, the device does not require any power supply. Finally, it must be noted that, preferably, the supporting structure which contains the mirrors is a box closed on all of its sides, except for two openings by which the image to be reproduced is captured and reflected, thus avoiding the occurrence of unwanted brightness or reflections, and providing a perfect framing of the picture.

Therefore, the optical device for painters described consists on an innovative structure with features unknown up to date, which together with its usefulness, provide it with a sufficient ground in order to obtain the privilege of exclusiveness requested.

### DESCRIPTION OF THE DRAWINGS

In order to complement the present description, and with the aim of helping to a better understanding of the features of the invention, a set of drawings is attached to the present specifications, on an illustrative, and non-limitative basis, which represent the following:

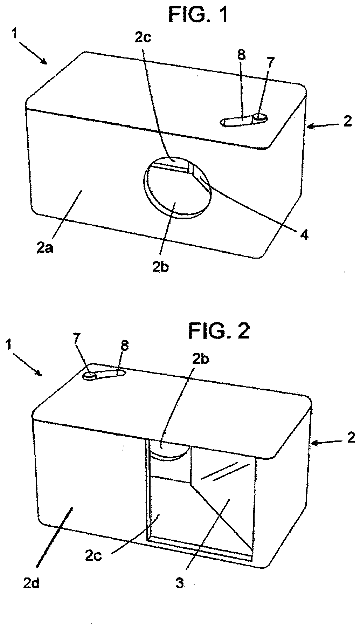

Figures no. 1 and 2 - They show back and front perspective views, respectively, of an exemplary embodiment of the optical device for painters, object of the invention, showing its external overall setting;

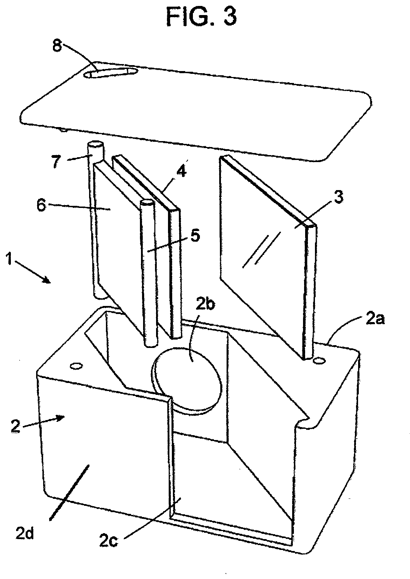

Figure no. 3 - shows a back exploded perspective view of the optical device for painters, according to the invention, shown in Figures 1 and 2, displaying the parts and elements contained;
And Figure no. 4 - shows a top schematic view of the device of the invention in use, showing the operation and the optical effect on the observer in a simulated way by means of a dashed line.

### PREFERRED EMBODIMENT OF THE INVENTION

In view of the aforementioned figures, and in accordance with the numbers stated, they show a non-limitative example of the optical device for painters of the invention, which comprises the parts and elements shown and described in detail below.

Hence, as shown in said figures, the device (1) of the invention comprises, essentially, a supporting structure (2) featuring, at least, two mirrors (3, 4) set one opposite to the other, both being placed so that they form a 45° angle, approximately, from the back side (2a) of the structure (2), in such a way that the image captured by a first mirror (3) of the scene (e) to be displayed, located on the front side of the device (1), is reflected in the second mirror (4) facing the first mirror (3), and the image reflected on the second mirror (4) is received by the observer (o) on the back side of the device.

One of the mirrors, for instance, the second mirror (4) is swinging, so that it can vary the its position angle (a) from the back side (2a) of the structure (2), and consequently, from the first mirror (3), in order to regulate the orientation of the image captured, and to adjust it accordingly.

Preferably, the second mirror (4) is swinging, and it is secured to the structure (2) by means of a mobile joint in an axis (5) attached to a plate (6) on which this second mirror (4) is attached, so that it permits its swinging in order to vary its position angle (a) from the back side (2a), and consequently, from the first mirror (3), in order to regulate the orientation of the reflection of the image captured, and to adjust it accordingly.

Such a possibility of the swinging mirror (4), in the preferred embodiment, can be done manually by means of the movement of the spring (7) located in the end opposite to the axis (5), the spring (7) running in an arched groove (8) made to this aim in the supporting structure (2), and which acts as a guide.

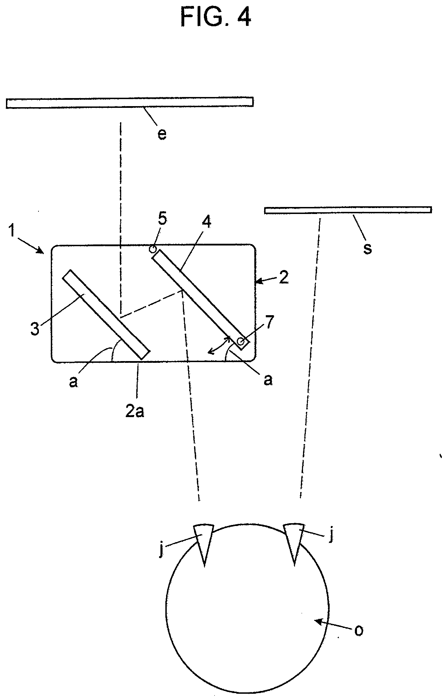

In a preferred embodiment, such structure (2) is a closed box with walls on each of its sides, and provided with two openings (2c, 2d) by which the image to be displayed is captured and reflected. More specifically, such opening consists on a rectangular opening (2c) provided in the front side (2d) of the box, which defines the structure (2) of the device (1), and which is oriented towards the image (e), as shown in Figure 4, and a circular opening (2b) provided on the back side (2a) of the box which defines the structure (2).

Figure 4 schematically represents the operation of the device (1), and its way of use facing the observer (o) between the image of the scene (e) to be reproduced and the working surface (s), so that, when the observer (o) watches with both eyes q), his / her brain makes him / her see the images set in front of him / her as overlapped, permitting him / her to paint or draw the observed object as traced in its shape and size, in a fast and accurate way.

Once the nature of the present invention has been sufficiently described, as well as the way to implement it, no further explanations are considered to be necessary for an expert in the matter to understand its scope and the advantages derived, noting that, while keeping its essence, it can be implemented in other embodiments which feature different details from the exemplary embodiment described, and which will be also covered by the protection granted, as far as they do not alter, change or modify its basic principle.

## Claims

1. An optical device for painters intended to be helpful for painters or designers in copying life models, when placed in front of him / her, between the scene, picture or model to be copied and the working surface, **characterized by** the fact of comprising a supporting structure (2) which includes, at least, two mirrors (3, 4) placed one opposite to the other, both being placed in such a way to form an angle (a) of approximately 45° from the back side (2a) of such structure, and in such a way that the image (e) on the back side of the device (1), captured by a first mirror (3) is reflected in the second mirror (4) and the image reflected in the second mirror (4) is received by the observer (o) placed on the back side of the device (1), and **characterized** because at least one of the mirrors, for instance the second mirror (4) is swinging, so that it allows to vary the angle (a) of the position from the back side (2a) of the structure (2) and, consequently, from the first mirror (3), in order to regulate the orientation of the reflection of the image which it collects, and to adjust it accordingly.

2. An optical device for painters, according to claim 1, **characterized in that** the second mirror (4) is swinging, and is secured to the structure (2) by a mobile joint in an axis (5) in conjunction with a plate (6) to which said mirror (4) is attached.

3. An optical device for painters, according to claim 2, **characterized in that** the second mirror (4) is swinging, and is moved manually around the axis (5) through the movement of the spring (7) which runs along an arched groove (8) located in the structure (2) and which acts as a guide.

4. An optical device for painters, according to any of claims 1 to 3, **characterized in that** the structure (2) is a closed box with walls on each side, and provided with two openings (2c, 2d) through which the image to be reproduced is captured and reflected.

5. An optical device for painters, according to claim 4, **characterized in that** the openings of the box which define the structure (2) consist on a rectangular opening (2c) provided in the front side (2d) of the box, and facing the image (e) and a circular opening (2b) provided in the back side (2a) facing the observer (o).
